# EUROPEAN PATENT APPLICATION

(11) **EP 2 218 915 A1**
(43) Date of publication of application: **18.08.2010**
(21) Application number: 08853820.2
(22) Date of filing: 19.11.2008
(51) Int. Cl.: F04C 29/00, F04B 39/00, F04C 18/16, H02K 5/22

(54) **SCREW COMPRESSOR**

(30) Priority: 30.11.2007 JP 2007310626
(71) Applicant: Kabushiki Kaisha Kobe Seiko Sho, Chuo-ku Kobe-shi Hyogo 651-8585 (JP)
(72) Inventor: The designation of the inventor has not yet been filed
(74) Representative: TBK-Patent
(86) International application number: PCT/JP2008/071021
(87) International publication number: WO 2009/069520

(57) **Abstract**

In a sealed type screw compressor 1 wherein a rotor casing 5 for housing therein a pair of male and female screw rotors 2, 3 and a motor casing 9 for housing therein a stator 6 and a rotor 7 are integrally connected with each other, a terminal board 13 for connecting a winding to a power source is secured to the motor casing 9 through a spacer 12, thereby preventing the damage of a wiring for connecting the winding to the power source.

## Description

### [Technical Field]

The present invention relates to a screw compressor integral with a motor.

### [Background Art]

In a screw compressor which compresses gas using a pair of male and female screw rotors, a rotor shaft which is driven by a motor or the like extends through a rotor casing which houses the rotors therein. It is very difficult to provide a complete seal between the rotor shaft and the rotor casing. To prevent leakage of a refrigerant, as described in Patent Documents 1 and 2, many screw compressors for compressing a refrigerant adopt a sealed structure wherein a rotor casing for housing screw rotors therein and a motor casing for housing both a stator and rotor of a motor therein are connected integrally with each other and a refrigerant leaking from a gap between a rotor shaft and the rotor casing is sealed within the motor casing.

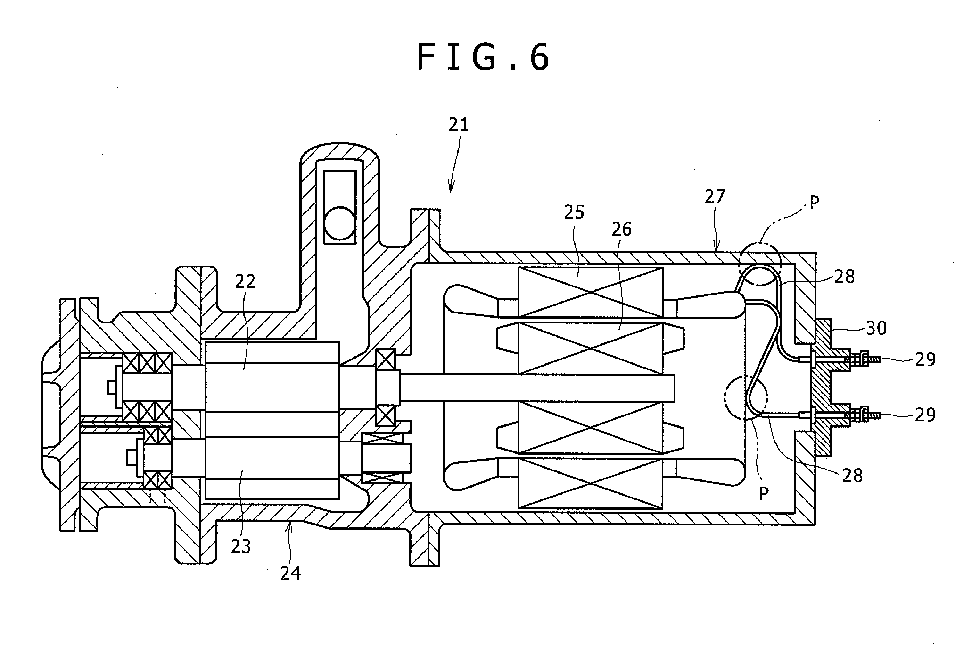

Fig. 6 shows the structure of a conventional screw compressor 21. In the screw compressor 21, a rotor casing 24 which houses therein a pair of male and female screw rotors 22, 23 and a motor casing 27 which houses therein both a stator 25 and rotor 26 of a motor are connected integrally with each other. End portions of electric wires 28 for supplying the stator 25 with electric power are drawn out to the exterior from an opening of the motor casing 27 and terminals 29 are connected to the thus-drawn out end portions of the electric wires. The terminals 29 are attached to a terminal board 30 and the terminal board 30 with the terminals 29 attached thereto is fixed to the motor casing 27.

When connecting the terminals 29 to the electric wires 28, it is necessary to ensure a working space between the terminals 29 and the motor casing 27. Therefore, the extra electric wires 28 are drawn out from the motor casing 27, and then the connecting work is performed. Thereafter, when fixing the terminal board 30 to the motor casing 27, the extra electric wires 28 drawn out for connecting the terminals 29 thereto are pushed into the motor casing 27. As indicated at portion P in the figure, the electric wires 28 sometimes come into abutment against the stator 25 and an inner wall of the motor casing 27. The electric wires 28 thus abutted against the stator 25 and the inner wall of the motor casing 27 may suffer a damage to their coatings due to vibration caused by operation of the screw compressor 21, which may cause short-circuit and burning of the motor.

Particularly in a screw compressor which compresses corrosive ammonia, for enhancing corrosive-resistant, it is known that aluminum wires coated with fluororesin are used as wires for the supply of electric power between the motor stator and the terminal board. Since aluminum wires are inferior in mechanical strength to copper wires for example, when the terminal board is fixed to the casing, the aluminum wires may be broken due to a strong bending stress from the contact between the wires and the stator and the casing.
[Patent Document 1] Japanese Patent Laid-Open Publication No. Hei 8 (1996)-210281
[Patent Document 2] Japanese Patent Laid-Open Publication No. 2005-171943

### [Disclosure of the Invention]

### [Problem to be Solved by the Invention]

In view of the above-mentioned problem it is an object of the present invention to provide a screw compressor integral with a motor wherein a wiring for connecting a winding to a power source is not damaged.

### [Means for Solving the Problem]

In a screw compressor according to the present invention, for solving the above-mentioned problem, a rotor casing for housing therein a pair of male and female screw rotors and a motor casing for housing therein a stator and a rotor are connected integrally with each other, and a terminal board for connecting the winding to a power source is secured to the motor casing through a spacer.

According to this structure, terminals are connected to front ends of electric wires drawn out from a motor winding, a spacer is disposed on the motor casing, the terminals are fixed to the terminal board, and then the terminal board is fixed to the spacer. Therefore, the extra electric wires drawn out to ensure a working space necessary for connecting the terminals to the front ends of the electric wires do not have to be pushed into the motor casing. Consequently, there is no danger of the damage of a wiring due to the contact with the stator and an inner wall of the motor casing.

In the screw compressor according to the present invention, the wiring between the winding and the terminal board may include an aluminum wire.

According to this structure, even if corrosive gas is compressed, the wiring is difficult to corrode because the aluminum wire has the corrosive-resistance.

In the screw compressor according to the present invention, the wiring between the winding and the terminal board may be coated with fluororesin.

According to this structure, the damage and corrosion of the wiring can be prevented in a more positive manner.

In the screw compressor according to the present invention, sealing members may be disposed between the motor casing and the spacer and also between the terminal board and the spacer.

According to this structure, such poisonous gas as ammonia can be completely compressed because the gas present within the motor casing is not allowed to leak to the exterior.

### [Effect of the Invention]

According to the present invention, since the spacer is provided, the extra electric wires drawn out from the casing to ensure a working space for connecting the terminals to the wiring front ends do not have to be pushed into the casing. Consequently, there is no fear of the damage of the electric wires due to the contact with the stator and the inner wall of the casing.

### [Brief Description of the Drawings]

Fig. 1 is a sectional view of a screw compressor of the present invention.
Fig. 2 is a partial sectional view showing a first procedure for mounting a terminal board of the screw compressor of Fig. 1.
Fig. 3 is a partial sectional view showing a second procedure for mounting the terminal board of the screw compressor of Fig.1.
Fig. 4 is a partial sectional view showing a third procedure for mounting the terminal board of the screw compressor of Fig. 1.
Fig. 5 is a partial sectional view showing a fourth procedure for mounting the terminal board of the screw compressor of Fig. 1.
Fig. 6 is a sectional view of a conventional screw compressor.

### [Explanation of Reference Numerals]

- 1 ...: screw compressor
- 2: male rotor
- 3: female rotor
- 4: rotor chamber
- 5: rotor casing
- 6: motor stator
- 7: motor rotor
- 8: motor chamber
- 9: motor casing
- 12: spacer
- 13: terminal board
- 14: aluminum wire
- 15: terminal rod

### [Best Mode for Carrying Out the Invention]

An embodiment of the present invention will be described below with reference to the drawings.

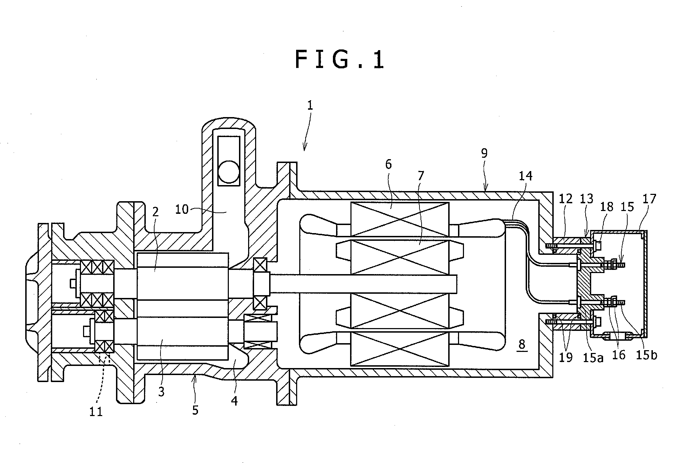

Fig. 1 shows a screw compressor 1 according to an embodiment of the present invention. In the screw compressor 1, a rotor casing 5 which forms a rotor chamber 4, the rotor chamber 4 housing therein screw rotors (a male rotor 2 and a female rotor 3) meshing with each other, and a motor casing 9 which forms a motor chamber 8, the motor chamber 8 housing therein a motor stator 6 and a motor rotor 7 sharing a shaft with the male rotor 2, are integrally connected with each other.

The screw rotors 2 and 3 are rotated with a rotational force of the motor rotor 7, suck in a refrigerant (ammonia gas) from a suction channel 10, then compress the refrigerant and discharge the compressed refrigerant from a discharge channel 11.

A terminal board 13 is secured through a spacer 12 to an end of the motor casing 9 on the side opposite to the rotor chamber 4. Terminal rods 15 connected to front ends of aluminum wires 14 are fixed to the terminal board 13, the aluminum wires 14 for the supply of electric power to a winding of the motor stator 6 and coated with fluororesin. The terminal rods 15 extend through through-holes formed in the terminal board 13 and flanges 15a thereof formed on the motor chamber 8 side are fitted in inside depressions of the terminal board 13. Further, with plural nuts 16 which are screwed together with external threads 15b formed at an outer end portion of each terminal rod 15, each terminal rod 15 is fixed to the terminal board 13. A connecting terminal of a wiring for the supply of electric power from a power source is sandwiched and fixed in between the nuts 16 screwed together with each terminal rod 15 so that electric power can be supplied to the winding of the motor stator 6.

With mounting bolts 18, the terminal board 13 is secured to the motor casing 9 together with an outer case 17 which covers front ends of the terminal rods 15 and the spacer 12.

O rings 19 are disposed on a surface of the spacer 12 for abutment against the motor casing 9 and on a surface of the spacer 12 for abutment against the terminal board 13 respectively to seal an opening of the motor casing 9 in an airtight manner. Although a refrigerant flows into the motor chamber 8 from the rotor chamber 4, it does not leak to the exterior because the motor chamber 8 is sealed. Thus, the screw compressor 1 has a sealed structure.

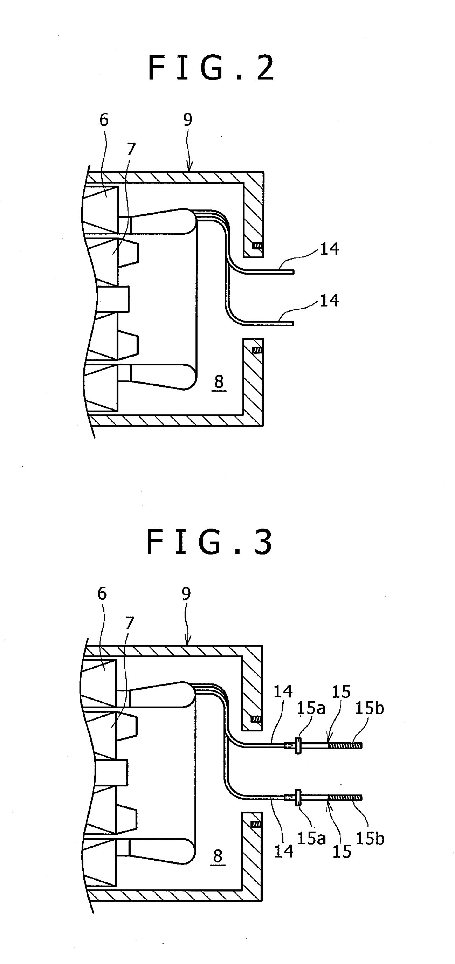

Next, Figs. 2 to 5 show the procedures for mounting the terminal board 13 to the screw compressor 1. First, as shown in Fig. 2, the front ends of the aluminum wires 14 connected to the motor stator 6 are drawn out from the opening of the motor casing 9. Then, as shown in Fig. 3, the terminal rods 15 are connected to the front ends of the aluminum wires 14. At this time, it is necessary to ensure a working space for stripping the front-end coatings of the aluminum wires 14 and for crimping the terminal rods 15 to cores of the aluminum wires 14. Therefore, the aluminum wires 14 are drawn out somewhat long to the exterior of the motor casing 9.

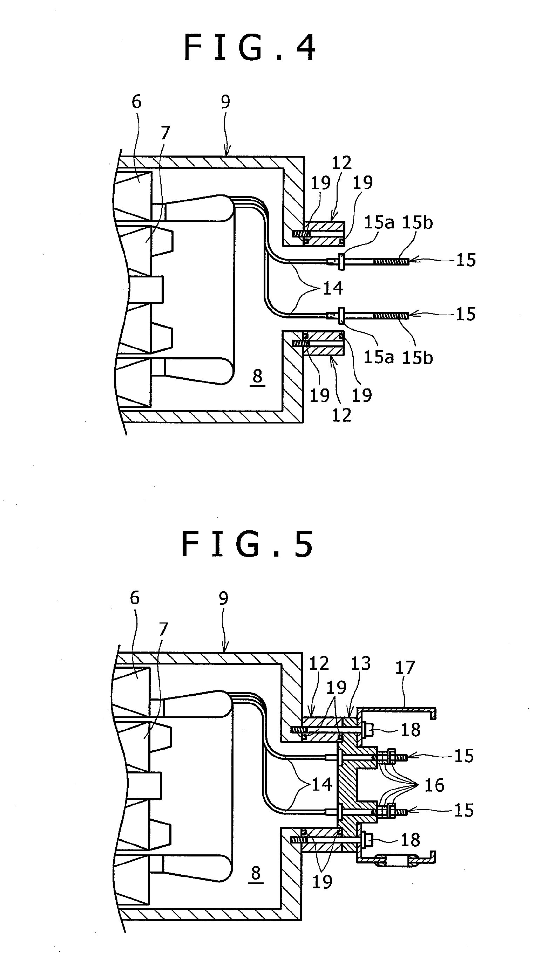

After connection of the terminal rods 15 to the aluminum wires 14, as shown in Fig. 4, a cylindrical or frame-like spacer 12 having a length almost equal to the drawn-out length of each of the aluminum wires 14 drawn out from the motor casing 9 is disposed on an outer wall of the motor casing 9. Then, as shown in Fig. 5, while passing the terminal rods 15 through the through holes formed in the terminal board 13, the terminal board 13 is disposed outside the spacer 12, then the spacer 12, terminal board 13 and outer case 17 are secured to the motor casing 9 with mounting bolts 18. Further, the nuts 16 are screwed together with the external threads 15b of the terminal rods 15 to fix the terminal rods 15 to the terminal board 13.

In this embodiment, as shown in Fig. 2, the spacer 12 having the same length as the extra aluminum wires 14 drawn-out from the motor casing 9 for the work of connecting the terminal rods 15 to the wires, is disposed to fix the terminal board 13 to the motor casing 9 without pushing the aluminum wires 14 again into the motor casing 9. Consequently, there is no fear of an extra bending stress being imposed on the aluminum wires 14 with consequent disconnection or damage of the wires. Besides, the aluminum wires 14 are not forced into the motor casing 9, do not come into abutment against the motor stator 6 and the inner wall of the motor casing 9, is not rubbed against the motor stator 6 and the motor casing 9 due to vibration in operation, for example, and the corrosive-resistant coating composed of fluororesin is not damaged, and therefore the core is not directly exposed to the refrigerant and the corrosion does not become advanced.

Although in the above embodiment a description has been given about an example in which the motor stator 6 and the terminal board 13 are connected together through the highly corrosive-resistant aluminum wires 14, the aluminum wires may be substituted by, for example, annealed copper wires. Further, the terminal board 13 may be secured not to an end but to a side of the motor casing 9 through the spacer 12. The rotor casing 5 and the motor casing 9 both used in the present invention are not classified in terms of structural integrity, but it must be understood that the portion which forms the rotor chamber 4 is the rotor casing 5 and the portion which forms the motor chamber 8 is the motor casing 9.

## Claims

1. A screw compressor **characterized in that:**
a rotor casing for housing therein a pair of male and female screw rotors and a motor casing for housing therein a stator and a rotor are connected integrally with each other; and
a terminal board for connecting a winding to a power source is secured to said motor casing through a spacer.

2. The screw compressor according to claim 1, wherein a wiring between said winding and said terminal board comprises an aluminum wire.

3. The screw compressor according to claim 1 or claim 2, wherein said wiring between said winding and said terminal board is coated with fluororesin.

4. The screw compressor according to any of claims 1 to 3, wherein sealing members are disposed between said motor casing and said spacer and also between said terminal board and said spacer.
